# EUROPÄISCHE PATENTANMELDUNG

(11) **EP 1 010 561 A2**
(43) Veröffentlichungstag der Anmeldung: **21.06.2000**
(21) Anmeldenummer: 99124377.5
(22) Anmeldetag: 07.12.1999
(51) Int. Cl.: B60J 7/22

(54) **Zusammenlegbarer Windschutz für Cabrio-Personenkraftwagen**

(30) Priorität: 14.12.1998 DE 29822230 U
(71) Anmelder: Stobinski, Peter, 71032 Böblingen (DE)
(72) Erfinder: Stobinski, Peter, 71032 Böblingen (DE)
(74) Vertreter: Blutke, Klaus Wilhelm, Dipl.-Ing.

(57) **Zusammenfassung**

Lösbar in einem Cabrio-Personenkraftwagen anzubringender Windschutz (1) mit einer Basisstange (2) und einer an deren Enden befestigten bogenförmig verlaufenden Bogenstange (3), zwischen denen ein flexibles Windschirmnetz (4) angeordnet ist.
Die Basis(2)- und Bogenstange (3) weisen in ihrem Längenmitte-Bereich und an ihren Enden eine Gelenkverbindung (5,6,7,8) auf.
Das Zusammenklappen erfolgt mittels der Gelenkverbindung (5,6) im Längenmitte-Bereich der Basis(2)- und Bogenstange (3).
Im zusammengeklappten Zustand des Windschutzes (1) sind die Schenkel der Basis(2)- und Bogenstange(3) durch die ihnen gemeinsame Gelenkverbindung (7,8) fächerartig zusammenschwenkbar.

## Beschreibung

Die Erfindung betrifft einen zusammenlegbaren Windschutz für Cabrio-Personenkraftwagen.

Bei Cabrios, die mit geöffnetem Verdeck gefahren werden, bildet sich ein störender Windstrom aus, der insbesondere von hinten auf die Hinterkopfseite von Fahrer und Beifahrer gerichtet ist. Dieser Windstrom wirkt sich durch seine abkühlende und zugige Wirkung störend auf das Befinden der Insassen aus.

Um diesen störenden Einfluß bei einer Fahrweise mit geöffnetem Verdeck zu unterbinden bzw. zu vermindern, muß dieser Windstrom gebrochen werden.

Hierzu dient nach dem Stand der Technik (Gebrauchsmuster 88 05 994.4 ) eine Vorrichtung zur Verringerung von Luftströmungen im Vordersitzbereich von Kraftfahrzeugen.Diese Vorrichtung besteht aus einer hinter den Vordersitzen angebrachten bis zur Kopfhöhe reichenden perforierten Folie bzw. Gewebebahn.

Desweiteren ist in der deutschen Patentschrift DE 353 7 644 C1 eine hinter den Vordersitzbereich angeordnete Schutzscheibe in Verbindung mit einer horizontalen plattenförmigen Abdeckung des hinteren Fahrgastraumes beschrieben.

Ein Nachteil der in dem Gebrauchsmuster 88 05 994.4 genannten rolloartigen Vorrichtung liegt in der aufwendigen Montage, Demontage und Aufbewahrung.

Zur Vermeidung dieses Nachteiles ist es Aufgabe der Erfindung, einen zusammenlegbaren Windschutz für Cabrio-Personenkraftwagen für eine platzsparende ortsunabhängige Aufbewahrung vorzusehen.

Diese Aufgabe der Erfindung wird in vorteilhafter Weise durch die Merkmale des Anspruches 1 gelöst.

Weiterbildungen der Erfindung sind durch die Unteransprüche gekennzeichnet.

Ausführungsbeispiele der Erfindung sind in den Zeichnungen dargestellt und werden im folgenden näher beschrieben.

Es zeigen:
- FIG. 1A: eine schematische Darstellung eines aufgeklappten Windschutzes;
- FIG. 1B: eine schematische Darstellung des hälftig zusammenklappbaren Windschutzes gemäß FIG. 1A,
- FIG. 1C: eine schematische Darstellung der fächerartig zusammenschwenkbaren Hälften des Windschutzes gemäß FIG. 1B,
- FIG. 1D: eine schematische Darstellung des zusammengeklappten und -geschwenkten Windschutzes;
- FIG. 2: eine schematische auszugsweise Darstellung der Anordnung eines Windschutzes in einem Cabrio-Personenkraftwagen;
- FIG. 3: eine schematische Darstellung eines Windschutzes mit einem anhängenden losen Windschirmnetzteil zur horizontalen Befestigung im rückwärtigen Teil des Cabrio-Kraftwagens hinter dem eigentlichen Windschutz;
- FIG. 4: eine schematische Darstellung eines Windschutzes gemäß FIG. 1A mit einer zusätzlichen Stützstange.

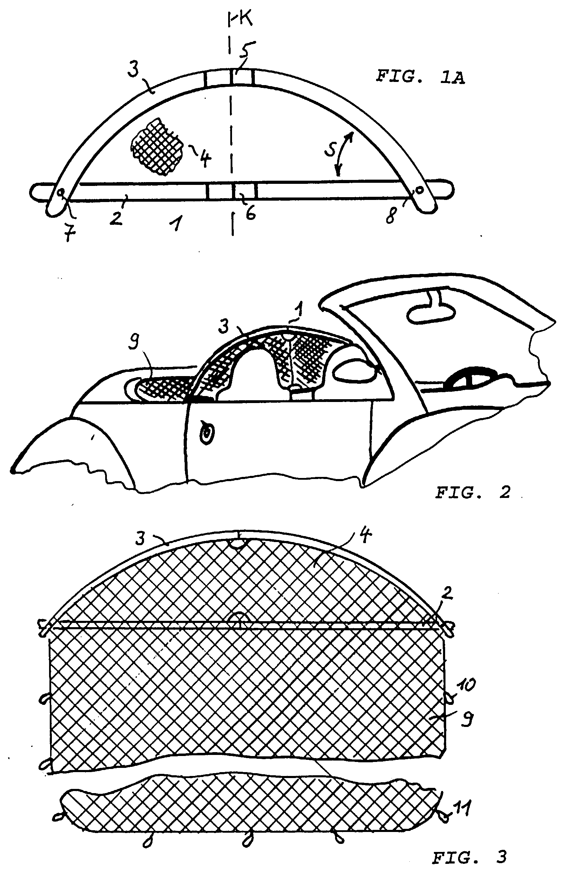

FIG. 1A zeigt eine schematische Darstellung des aufgeklappten Windschutzes 1.
Dieser besteht aus einem Rahmengestänge 2,3 und einem innerhalb des Rahmens angeordneten Windschirmnetzes 4. Das Windschirmnetz 4 ist aus Übersichtsgründen nur ausschnittsweise dargestellt. Die Befestigung des Windschirmnetzes 4 am Rabmengestänge 2,3 erfolgt
durch Kleben, Verschweißen, Klemmen, Aufschrauben, Annähen und dgl..

Das Rabmengestänge besteht aus einer Basisstange 2 und einer an deren Enden befestigten bogenfömig oder teilkreisförmig verlaufenden Bogenstange 3.

Der Windschutz 1 wird durch einen nicht dargestellten lösbaren Verschluß, vorzugsweise einem Steckverschluß, am Fahrzeug befestigt und aufrecht in Kopfhöhe hinter dem Fahrer und Mitfahrer angebracht.

Die Basisstange 2 und die Bogenstange 3 weisen in ihrem gestrichelt dargestellten Längenmitte-Bereich K eine für das Zusammenklappen des Windschutzes 1 geeignete Gelenkverbindung 5 und 6 auf. Für eine derartige Gelenkverbindung sind insbesonders Scharniere geeignet, die bei einem Öffnungswinkel von 180 Grad mittels einer beidseitigen Öffnungssperre arretiert werden können, um ein 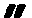 Einknicken" des Windschutzes bei starker Windbelastung zu verhindern. Die Enden der Basis- 2 und Bogenstange 3 sind jeweils durch ein Schwenkgelenk 7 und 8 verbunden, welches ein fächerartiges Zusammenschwenken der Stangenenden in Richtung S gestattet.Ein solches Schwenkgelenk kann auf verschiedene Art und Weise realisiert werden, z.B. durch einen Gelenkstift, der durch Bohrungen in den Stangenenden verläuft.

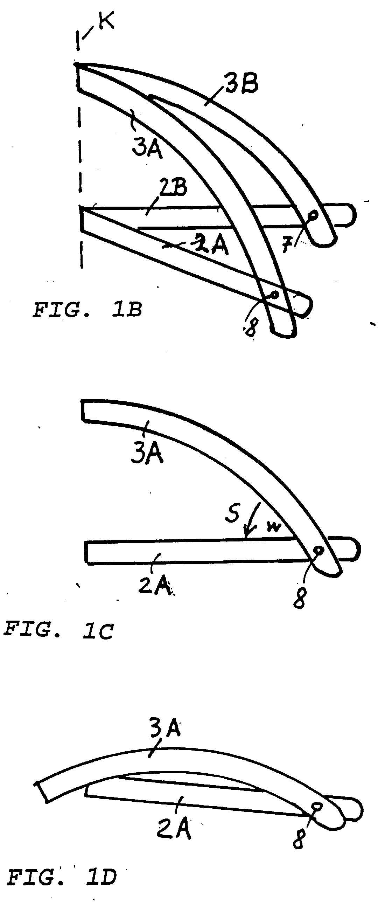

FIG. 1 B zeigt eine schematischen Darstellung eines vom Fahrzeug gelösten Windschutzes 1 , welcher nach Lösen der Arretierungen an den Gelenkverbindungen 5 und 6 hälftig um die Achse K zusammengeklappt wird. Die eine Hälfte wird von der Basisstangenhälfte 2A und der Bogenstangenhälfte 3A, die andere Hälfte von der Basisstangenhälfte 2B und der Bogenstangenhälfte 3B gebildet. Das Windschirmnetz (in FIG. 1B nicht dargestellt) ist elastisch genug , um dem Klappvorgang problemlos folgen zu können.

Im zusammengeklappten Zustand(FIG. 1C) beider Windschutzhälften bilden die Schenkel 2A und 3A der Basis- und Bogenstange noch einen Winkel w.
Mittels des Schwenkgelenks 8 (und 7, verdeckt) werden die Schenkel 2A und 3A (sowie 2B und 3B, verdeckt) fächerartig in Richtung S zusammengeschwenkt. Das zwischen den Rahmenstangen angeordnete Windschirmnetz ist flexibel, um auch dieser Schwenkbewegung problemlos folgen zu können.

Im zusammengeklappten und zusammengeschwenkten (FIG.1D) Zustand ist der Windschutz 1 derart verkleinert, daß er leicht in einer entsprechenden Hülse o.dgl. aufbewahrt werden kann.

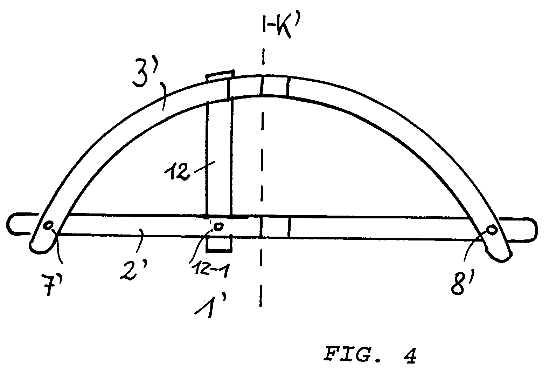

FIG. 2 zeigt eine schematische auszugsweise Darstellung der Anordnung des Windschutzes 1 in einem Cabrio-Personenkraftwagen.
Der Windschirm ist aufrecht hinter dem Fahrer- und Beifahrersitz in Kopfhöhe angeordnet. Die Bogenstange ist wie in FIG.1A mit 3 gekennzeichnet.Der rückwärtige Teil des Kraftfahrzeuges ist angenähert horizontal mit einem (wie aus FIG. 3 ersichtlichen) losen Windschirmnetzteil 9, welches mit dem Windschutz 1 verbunden ist, abgedeckt. Es hat die Aufgabe, auftretende Windwirbel und -ströme zu brechen und in eine angenehme nicht störende Luftströmung zu transformieren.

FIG. 3 zeigt eine schematische Darstellung eines Windschutzes mit einem anhängenden losen Windnetzteil 9 zur horizontalen Befestigung im rückwärtigen Teil des Cabrio-Kraftwagens hinter dem eigentlichen Windschutz, bestehend aus Basisstange 2 und Bogenstange 3 sowie dem Windschirmnetz 4, das sich über die Basisstange hinaus als loses Windnetzteil 9 fortsetzt. Dieses Windschirmnetzteil 9 wird randwärts durch bekannte lösbare Befestigungsmittel wie Druckknöpfe, Klettbänder, Gummizüge oder Haken 10, 11 im Kraftfahrzeug befestigt.

FIG. 4 zeigt eine schematische Darstellung eines Windschutzes gemäß FIG. 1 mit einer zusätzlichen Stützstange 12.

Die Stützstange 12 ist zwischen der Basisstange 2' und der Bogenstange 3' angeordnet. Ihr unteres Ende ist mit der Basistange über ein Schwenkgelenk 12-1 verbunden. Das obere Ende der Stützstange 12 ist in der Bogenstange 3' derart geführt oder lösbar befestigt, daß es nach dem Zusammenklappen der Windschutzhälften um die Achse K' beim Zusammenschwenken der Rahmenschenkel ausweichen kann.
Das Windschirmnetz ist elastisch genug, den Klapp- und Schwenkvorgang nicht zu behindern.
Das Schwenkgelenk 12-1 kann z.B. wie die Schwenkgelenke 7' und 8' durch einen in einer Bohrung verlaufenden Schwenkbolzen gebildet werden.

Die Stützposition der Stützstange 12 an der Bogenstange 3' ist vorzugsweise mit einer lösbaren Arretierung verbunden.
Das Stützstangenende kann mit einem Kopf versehenen sein, der in einer Aussparung der Bogenstange geführt wird.

## Patentansprüche

1. Lösbar in einem Cabrio-Personenkraftwagen anzubringender Windschutz (1)
mit einer Basisstange (2) und einer an deren Enden befestigten bogenförmig verlaufenden Bogenstange (3), zwischen denen ein flexibles Windschirmnetz (4) angeordnet ist,
dadurch gekennzeichnet, daß
die Basis(2)- und Bogenstange (3) in ihrem Längenmitte-Bereich und an ihren Enden eine Gelenkverbindung (5,6,7,8) aufweisen,
der Windschutz (1) im vom Kraftfahrzeug gelösten Zustand
mittels der Gelenkverbindung (5,6) im Längenmitte-Bereich der Basis(2)- und Bogenstange (3) zusammenklappbar ist,
im zusammengeklappten Zustand des Windschutzes (1) die Schenkel der Basis(2)- und Bogenstange(3) durch die ihnen gemeinsame Gelenkverbindung (7,8) fächerartig zusammenschwenkbar sind.

2. Anordnung nach Anspruch 1,
dadurch gekennzeichnet, daß
die Basis(2')- und Bogenstange (3') mindestens durch eine Stützstange (12) miteinander verbunden sind,
daß diese Stützstange (12) an einem ihrer Enden mit einem Gelenk (12-1) mit der Basis(2')- oder Bogenstange (3')verbunden ist und an ihrem anderen Ende für den Schwenkvorgang ausweichbar in bzw. an der Bogen-(3') oder Basisstange(2') geführt oder lösbar mit ihr verbunden ist.

3. Anordnung nach Anspruch 1 oder 2,
dadurch gekennzeichnet, daß
das Windschirmnetz (4) über die Basisstange (2) hinausreicht und der hinausreichende Teil (9) des Windschirmnetzes in angenähert horizonaler Lage über dem rückwärtigen Innenbereich des Kraftfahrzeuges anordnungsbar ist.

4. Anordnung nach Anspruch 3,
dadurch gekennzeichnet, daß
das Teil (9) des Windschirmnetzes randwärts lösbar am Kraftfahrzeug befestigbar ist.
